# EUROPÄISCHE PATENTSCHRIFT

(11) **EP 4 417 880 B1**
(45) Veröffentlichungstag und Bekanntmachung des Hinweises auf die Patenterteilung: **25.11.2026**
(21) Anmeldenummer: 24151772.1
(22) Anmeldetag: 15.01.2024
(51) Int. Cl.: F24D 3/10, F16K 11/00, F24D 12/02

(54) **HYDRAULISCHE VERTEILEREINRICHTUNG UND VENTILEINRICHTUNG FÜR SELBIGE**
HYDRAULIC DISTRIBUTOR DEVICE AND VALVE DEVICE FOR SAME
DISPOSITIF DE DISTRIBUTION HYDRAULIQUE ET DISPOSITIF DE SOUPAPE POUR CELUI-CI

(30) Priorität: 17.02.2023 DE 102023103933
(43) Veröffentlichungstag der Anmeldung: 21.08.2024
(73) Patentinhaber: Malinowsky, Detlef, 85662 Hohenbrunn (DE)
(72) Erfinder: Malinowsky, Detlef, 85662 Hohenbrunn (DE)
(74) Vertreter: Manitz Finsterwald Patent- und Rechtsanwaltspartnerschaft mbB

(56) Entgegenhaltungen:
- EP-A1- 3 184 866
- EP-A2- 0 898 100
- WO-A1-2008/154921
- WO-A1-2019/206510
- DE-A1- 102005 020 857
- DE-A1- 102016 119 781

## Beschreibung

Die vorliegende Erfindung betrifft eine hydraulische Verteilereinrichtung für ein Energiesystem eines Gebäudes sowie eine Ventileinrichtung, insbesondere eine Ventileinrichtung für diese Verteilereinrichtung.

In Zeiten zunehmender Bedeutung der Effizienz von Energiesystemen von Gebäuden kommt hydraulischen Verteilereinrichtungen, die in solchen Systemen zum Einsatz gelangen, große Bedeutung zu. Sie dienen nämlich dazu, die Energie zwischen zumindest einer Energiequelle und zumindest einer Wärmesenke des Systems mittels eines Energietransportfluids bedarfsgerecht zu verteilen. In vielen Fällen liegen mehrere Wärmesenken vor, die unterschiedlichen Wärmebedarf aufweisen. Um diesen Bedarf zuverlässig zu bedienen, werden Verteilereinrichtungen eingesetzt, die es ermöglichen, das Energietransportfluid - in den meisten Fällen Wasser - gezielt den Wärmesenken zukommen zu lassen. Eine Verteilereinrichtung ermöglicht es auch, Energiesysteme mit mehr als einer Wärmesenke zu realisieren.

Herkömmliche Verteilereinrichtungen der eingangs beschriebenen Art sind vergleichsweise komplex und benötigen erheblichen Bauraum.

Die DE 10 2016 119781 A1, EP 0898 100 A2 und EP 3 184 866 A1 beschreiben jeweils eine Verteilereinrichtung mit den Merkmalen des Oberbegriffs des Anspruchs 1.

Es ist eine Aufgabe der vorliegenden Erfindung, eine bauraumoptimierte Verteilereinrichtung zu schaffen, die eine effiziente Verteilung eines Energietransportfluids in einem Energiesystem eines Gebäudes ermöglicht.

Erfindungsgemäß wird die vorstehend genannte Aufgabe durch eine Verteilereinrichtung gelöst, die zumindest zwei versetzt zueinander angeordnete Verteilerrohre umfasst. Die Verteilerrohre sind mit zumindest einer Wärmequelle oder Wärmesenke des Energiesystems in Verbindung bringbar. Die Verteilereinrichtung umfasst ferner zumindest zwei quer, insbesondere senkrecht zu den Verteilerrohren angeordnete rohrförmige Ventileinrichtungen, die versetzt zueinander angeordnet sind und die jeweils mit zumindest einer Wärmesenke bzw. Wärmequelle des Energiesystems in Verbindung bringbar sind. Die Ventileinrichtungen und die Verteilerrohre liegen in einer gemeinsamen Ebene oder in parallel versetzten Ebenen, so dass die Verteilereinrichtungen die Verteilerrohre durchqueren.

Mit anderen Worten sind die Ventileinrichtungen und die Verteilerrohre, die jeweils parallel zueinander angeordnet sein können, nicht nebeneinander angeordnet, sondern - bildlich gesprochen - ineinander integriert. Die resultierende Bauform ist sehr kompakt, was auch bedeutet, dass Wärmeverluste minimiert werden.

Erfindungsgemäß sind die Ventileinrichtungen derart angeordnet und ausgebildet, dass ihre die Verteilerrohre durchquerenden Abschnitte von einem in den Verteilerrohren geführten Fluid vollständig umströmt werden.

Eine Erstreckung des Strömungsquerschnitts der Verteilerrohre kann in einer Richtung senkrecht zu der gemeinsamen Ebene oder den gemeinsamen Ebenen größer sein als die Erstreckung der Ventileinrichtungen in dieser Richtung, um zu ermöglichen, dass das Fluid um die Ventileinrichtungen herumfließen kann. Grundsätzlich können die Verteilerrohre einen runden Querschnitt aufweisen. Ein Umströmen der Ventileinrichtungen wird jedoch optimiert, wenn ein Strömungsquerschnitt der Verteilerrohre zumindest in einem Bereich der Ventileinrichtungen rechteckig oder oval ist.

Grundsätzlich ist darauf hinzuweisen, dass die Verteilerrohre zumindest im Bereich der Verteilereinrichtung im Wesentlichen gleichartig ausgestaltet sein können. Es ist jedoch durchaus denkbar, dass Verteilerrohre mit unterschiedlichen Dimensionierungen und/oder Strömungsquerschnitten zum Einsatz gelangen. Obige Ausführungen gelten in analoger Weise für die Ventileinrichtungen.

Gemäß einer weiteren Ausführungsform ist zumindest eine der Ventileinrichtungen - bevorzugt alle Ventileinrichtungen - parallel versetzt zu einer durch die Verteilerrohre aufgespannten Ebene angeordnet.

Die Wärmequelle kann ein Pufferspeicher sein oder einen Pufferspeicher umfassen. Bevorzugt ist der Pufferspeicher ein Schichtspeicher. Durch die hydraulische Ventileinrichtung kann auch aus einem einfachen Wasserspeicher ein Schichtspeicher gebildet werden.

Die vorliegende Erfindung betrifft ferner eine Ventileinrichtung für eine hydraulische Verteilereinrichtung, insbesondere für eine hydraulische Verteilereinrichtung gemäß einer der vorstehend beschriebenen Ausführungsformen.

Die DE 10 2005 020 857 A1, WO 2019/206510 A1 und WO 2008/154921 A1 beschreiben Ventileinrichtungen mit einem Ventilkörper, der zumindest zwei Ventilsegmente umfasst, wobei benachbarte Ventilsegmente direkt miteinander gekoppelt sind.

Die Ventileinrichtung umfasst ein Außenrohr, das einen zylinderförmigen Ventilraum definiert, der zumindest eine erste und eine zweite Anschlussöffnung aufweist. Ferner ist ein in dem Ventilraum angeordneter und um eine Ventilachse verdrehbarer zylinderförmiger Ventilkörper vorgesehen, der von einem Energietransportfluid - z.B. Wasser - durchströmbar ist und der zumindest eine axiale Öffnung und zumindest eine radiale Ventilöffnung aufweist, wobei die erste und/oder die zweite Anschlussöffnung in Abhängigkeit von einer Winkelstellung des Ventilkörpers in Verbindung mit der radialen Ventilöffnung bringbar ist. Der Ventilkörper umfasst zumindest zwei hülsenförmige Ventilsegmente, die in axialer Richtung durch ein Verbindungselement miteinander gekoppelt sind. Das Verbindungselement weist zumindest ein Formschlusselement auf, das mit zumindest einem komplementären Formschlusselement an einem der Ventilsegmente einen Kopplungsabschnitt bildet.

Mit anderen Worten ist der Ventilkörper modular aufgebaut und kann bei Bedarf durch eine Anpassung der Art und/oder Zahl der miteinander gekoppelten Ventilsegmente an den jeweils vorliegenden Bedarf bzw. die Länge des Außenrohrs und/oder die Anzahl und/oder Anordnung der Anschlussöffnungen angepasst werden. Hierfür ist es lediglich erforderlich, die geeignete Anzahl und Ausgestaltung der Ventilsegmente zu wählen und diese mittels einer entsprechenden Anzahl von Verbindungselementen miteinander zu koppeln.

Der modulare Charakter der erfindungsgemäßen Ventileinrichtung bringt erhebliche Flexibilitätsvorteile und Kosteneinsparungen mit sich, da nicht für jeden Anwendungsfall eine vollkommen neue Ventileinrichtung vorgehalten werden muss.

Wenn die erfindungsgemäße Ventileinrichtung in einer hydraulischen Verteilereinrichtung der eingangs beschriebenen Art eingesetzt wird, sind die Anschlussöffnungen in dem Inneren der entsprechenden Verteilerrohre angeordnet.

Gemäß einer Ausführungsform ist der Kopplungsabschnitt in Umfangsrichtung formschlüssig wirksam, insbesondere ausschließlich in Umfangsrichtung. Bei verschiedenen Ausführungsformen ist eine axiale Kopplung der Ventilsegmente durch Verbindungselemente entbehrlich, da der Ventilkörper durch entsprechende Deckel in dem Außenrohr axial gesichert ist. Für bestimmte Anwendungsfälle kann aber auch eine axiale Kopplung, z.B. eine Schnapp- oder Rastverbindung, vorgesehen sein, um die Ventilsegmente verliersicher aber lösbar miteinander zu verbinden.

Erfindungsgemäß sind beide Ventilsegmente über einen jeweiligen Kopplungsabschnitt mit dem Verbindungselement gekoppelt.

Das Formschlusselement kann einen Vorsprung umfassen, der in eine komplementäre Ausnehmung (komplementäres Formschlusselement) eingreift.

Der Ventilkörper kann ein axiales Abschlusselement umfassen, das zumindest ein Formschlusselement aufweist, das mit zumindest einem komplementären Formschlusselement an einem der Ventilsegmente einen Kopplungsabschnitt bildet. Insbesondere gleicht das Formschlusselement des Abschlusselements dem Formschlusselement des Verbindungselements.

Das Abschlusselement kann einen Antriebsabschnitt zur antriebswirksamen Kopplung mit einem Stellmotor aufweisen, beispielsweise einen Abschnitt mit einem Innen- oder Außenmehrkantelement.

Weitere Ausführungsformen der vorliegenden Erfindung sind in den Ansprüchen, der Beschreibung und den beigefügten Zeichnungen angegeben.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: ein Beispiel für ein Energiesystem, bei dem eine erfindungsgemäße hydraulische Verteilereinrichtung zum Einsatz gelangen kann,
- Fig. 2 bis 6: verschiedene (Schnitt-)Ansichten einer Ausführungsform der hydraulischen Verteilereinrichtung,
- Fig. 7 bis 11: verschiedene (Schnitt-)Ansichten einer Ausführungsform einer erfindungsgemäßen Ventileinrichtung,
- Fig. 12: eine Ausführungsform des Außenrohrs der Ventileinrichtung,
- Fig. 13: eine Explosionsdarstellung des Ventilkörpers der Ventileinrichtung und
- Fig. 14: ein Verteilerrohr.

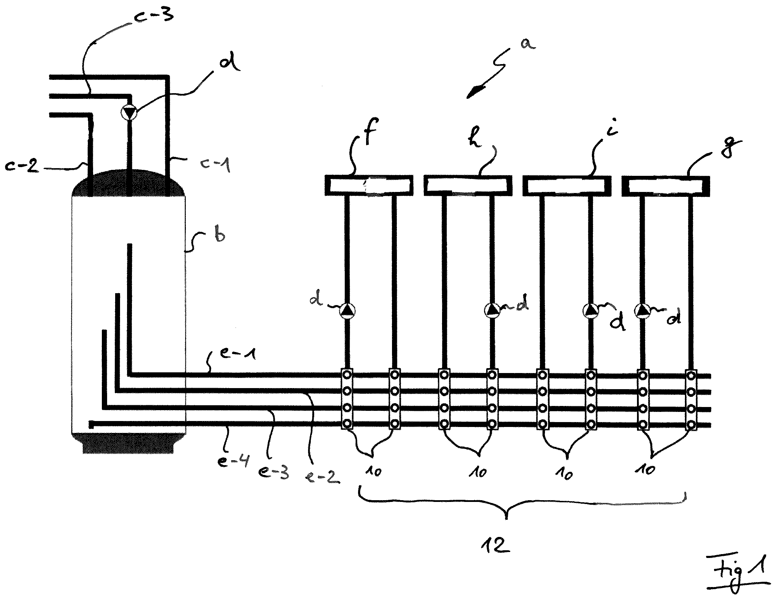

Fig. 1 zeigt ein Heizsystem a eines Gebäudes. Das Heizsystem a umfasst einen Wärmespeicher b, in dem Wasser in temperaturgeschichteter Form vorliegt. D.h. in einem oberen Bereich des Wärmespeichers b liegt das Wasser in einem deutlich höheren Temperaturniveau vor als in einem unteren Bereich des Wärmespeichers b (z.B. 60°C bzw. 28°C). In dem Wärmespeicher b ist ferner ein Wärmetauscher angeordnet (nicht gezeigt), dem mittels einer Kaltwasserleitung c-1 Wasser zugeführt werden kann. Das erwärmte Wasser wird dem Wärmetauscher durch eine Warmwasserleitung c-2 entnommen. Dem Wärmespeicher b kann auch Wasser von extern zugeführt werden (Leitung c-3, Pumpe d).

Dem Wärmespeicher b kann Wasser mittels Leitungen e-1 bis e-4 auf verschiedenen Temperaturniveaus (z.B. 60°C, 50°C, 35°C und 28°C) entnommen werden. Umgekehrt ist es natürlich auch möglich, dem Wärmespeicher 34 durch die Leitungen e-1 bis e-4 entsprechend warmes Wasser auf dem jeweils geeigneten Temperaturniveau zuzuführen.

Der Wärmespeicher b steht mit verschiedenen Energiequellen in Verbindung, nämlich in dem beschriebenen Beispiel mit einem Heizkessel f und mit einer Solaranlage g. Energiesenken bilden beispielsweise ein Fußbodenheizkreis h sowie Heizkörper i. Die genannten Komponenten f, g, h und i sind über jeweils zwei als Mehrwegeventile ausgebildete Ventile 10 mit den Leitungen e-1 bis e-4 verbunden. Durch geeignete Schaltstellungen der Ventile 10 können die einzelnen Komponenten f, g, h und i dem Wärmespeicher b Wasser mit der geeigneten Temperatur zuführen bzw. entnehmen, um die Energieeffizienz des Gesamtsystems zu optimieren. Es ist aber auch durchaus möglich, in bestimmten Situationen die Energiequellen f, g bedarfsgerecht mit den Energiesenken h, i "kurzzuschließen". Durch eine geeignete Ausgestaltung der Ventile 10 ist eine Vielzahl von Verbindungsvarianten auf einfache Weise realisierbar, die die für die jeweilige Situation optimale Verteilung von Wasser in dem System a sicherstellt.

Das vorliegend beispielhaft beschriebene System a kann beliebig erweitert/modifiziert werden. Mit steigender Anzahl von Energiequellen und Energiesenken steigt die Anzahl der benötigten Ventile 10.

Die Ventile 10 bilden zusammen eine hydraulische Verteilereinrichtung 12.

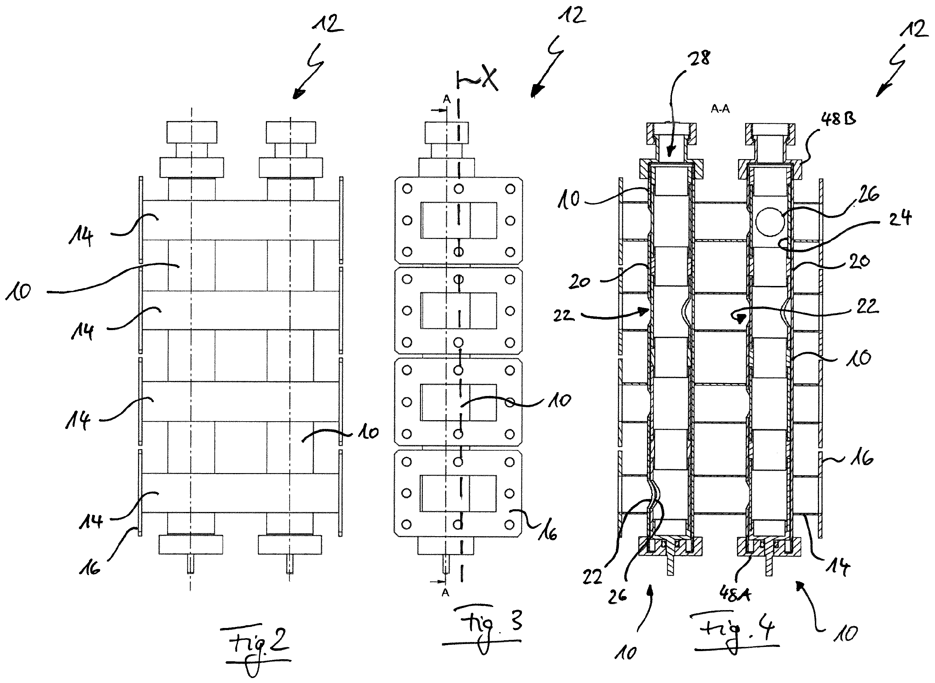

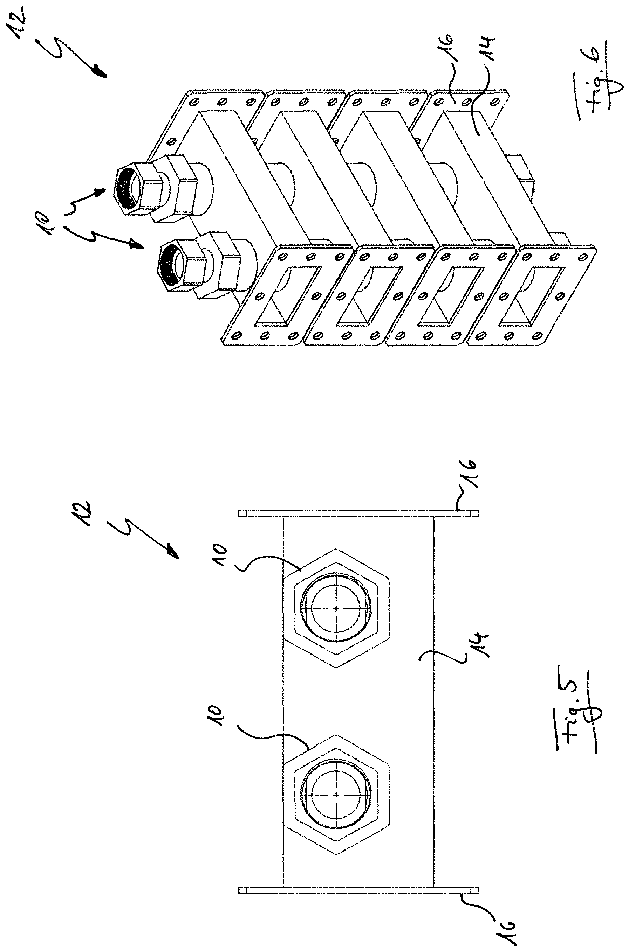

Anhand der Fig. 2 bis 6 wird nachfolgend die Konstruktionsweise der Verteilereinrichtung 12 beschrieben. Aus Gründen der Übersichtlichkeit weist diese lediglich zwei Ventile 10 auf.

Die parallel angeordneten Ventile 10 durchqueren vier parallel angeordnete Verteilerrohre 14, die mit den Leitungen e-1 bis e-4 verbunden sind (nicht gezeigt). Zu diesem Zweck weisen die Verteilerrohre 14 jeweils Flansche 16 auf. Die Flansche 16 ermöglichen es auch, mehrere Module, wie sie in den Fig. 2 bis 6 gezeigt sind, miteinander zu koppeln, um eine größere Verteilereinrichtung zu schaffen. Beispielsweise können vier solche Module gekoppelt werden, um die in Fig. 1 gezeigte Verteilereinrichtung 12 zu schaffen.

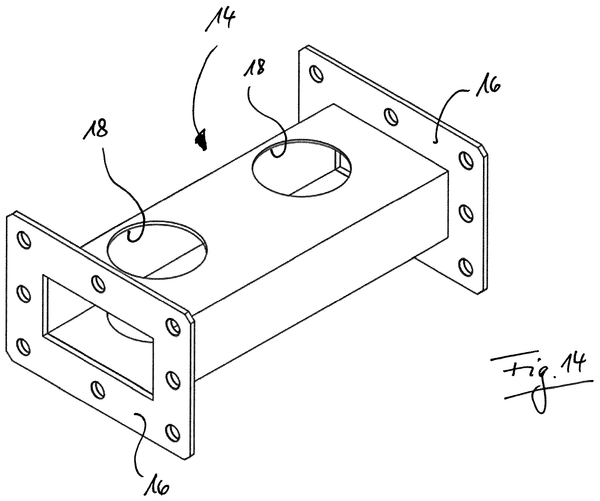

Fig. 14 zeigt eines der Verteilerrohre 14 ohne eingesetzte Ventile 10. Diese werden in Ventilaufnahmeöffnungen 18 eingesetzt, die in dem Verteilerrohr 14 vorgesehen sind. Es ist zu erkennen, dass die Ventilaufnahmeöffnungen 18 etwas versetzt zur Mitte des Verteilerrohrs 14 angeordnet sind. Dies ermöglicht eine bessere Umströmung der Verteilerrohre 14 bei Betrieb der Einrichtung 12.

Im vorliegenden Anwendungsbeispiel haben die Verteilerrohre 14 einen im Wesentlichen rechteckigen Querschnitt. Es sind aber auch andere Querschnittsformen denkbar, wie beispielsweise eine ovale Querschnittsform. Es ist auch möglich, Verteilerrohre mit einem kreisrunden Querschnitt einzusetzen. Verglichen mit ovalen oder rechteckigen Querschnitten verblocken dann allerdings Ventile 10 mit vergleichbarer Dimensionierung einen größeren Teil des Querschnitts der Verteilerrohre, insbesondere wenn die Ventile die Verteilerrohre mittig durchqueren.

Die außermittige Anordnung der Ventile 10 ist auch gut den Fig. 3, 5 und 6 zu entnehmen, die eine Seitenansicht der Einrichtung 12 in bzw. gegen Fluidstromrichtung, eine Ansicht von oben bzw. eine Perspektivansicht der Einrichtung 12 zeigen. Trotz dieser außermittigen Anordnung baut die Einrichtung äußerst kompakt, was einerseits hinsichtlich des erforderlichen Bauraums von Vorteil ist und andererseits damit auch zur Verringerung des Wärmeverlusts im Bereich der Einrichtung 12 beiträgt.

In Fig. 3 ist nochmals gut der Versatz der durch die Drehachsen der Ventile 10 aufgespannten Ebene A und einer Mittenebene X der Verteilerrohre 14 zu entnehmen. Eine Ausführungsform, bei der die Ebenen A, X zusammenfallen, ist ebenfalls möglich.

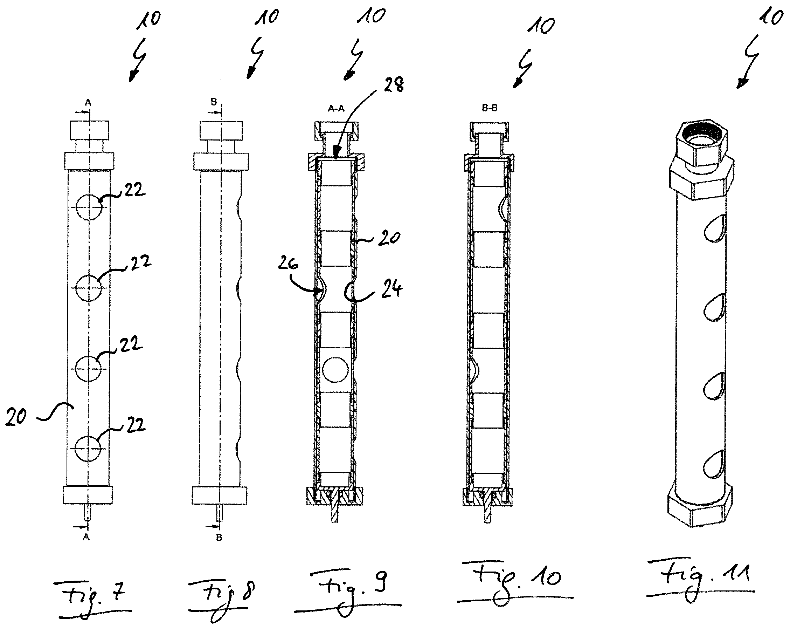

Fig. 4 zeigt einen Schnitt durch die Verteilereinrichtung 12 in der Ebene A. Ihr ist zu entnehmen, dass es sich bei den Ventilen 10 um Mehrwegeventile handelt. Deren Aufbau wird nachfolgend anhand der Fig. 7 bis 13 erläutert.

In der Fig. 7 ist ein Ventil 10 in einer Seitenansicht zu sehen. Fig. 8 zeigt ebenfalls eine Seitenansicht des Ventils 10, wobei dieses um 90° gedreht wurde. Die Fig. 9 und 10 zeigen Schnitte durch das Ventil 10 in den in den Fig. 7 und 8 angegebenen Ebenen A bzw. B. Fig. 11 ist eine Perspektivansicht des Ventils 10.

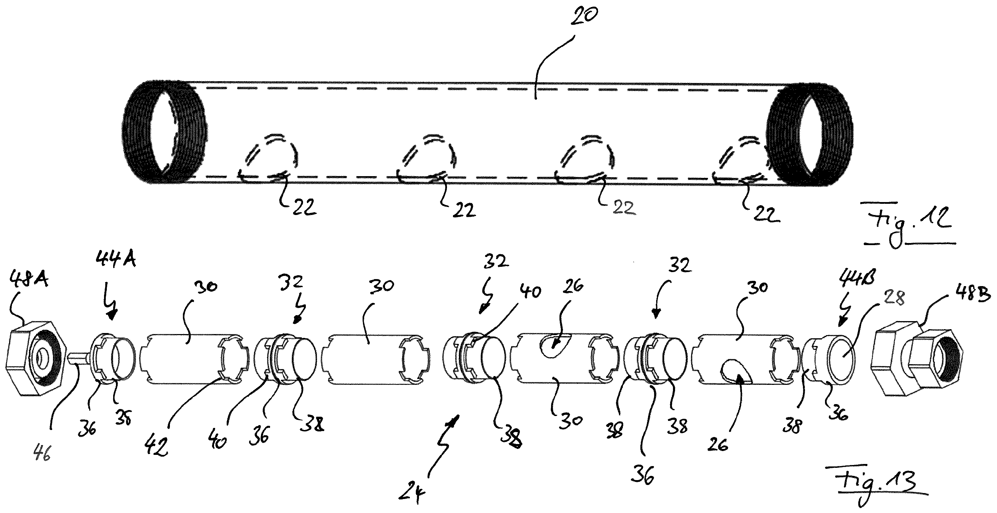

Das Ventil 10 umfasst ein Außenrohr 20, das auch in Fig. 12 gezeigt ist. Das Außenrohr 20 definiert einen zylinderförmigen Ventilraum mit im vorliegenden Beispiel vier Anschlussöffnungen 22. Die Anschlussöffnungen 22 stehen mit dem Inneren der Verteilerrohre 14 in Verbindung (vgl. Fig. 4).

In dem Ventilraum des Außenrohrs 20 ist ein Ventilkörper 24 angeordnet, der eine Mehrzahl von Ventilöffnungen 26 aufweist (siehe z.B. Fig. 4 und 9). Durch Drehung des Ventilkörpers 24 im Inneren des Außenrohrs 20 können die Ventilöffnungen 26 mit den Anschlussöffnungen 22 in Deckung gebracht werden, so dass Fluid aus dem entsprechenden Verteilerrohr 14 in das Innere des Ventilkörpers 24 strömen und es durch eine axiale Öffnung 28 verlassen kann. Es versteht sich, dass das Fluid auch in umgekehrter Richtung durch das Ventil 10 strömen kann.

Die vorstehend beschriebene Situation ist bei dem linken Ventil 10 in der Fig. 4 im Bereich des untersten Verteilerrohrs 14 zu sehen. Bei dem rechten Ventil 10 sind alle Anschlussöffnungen 22 blockiert.

Der Aufbau des Ventilkörpers 24 wird nachfolgend anhand der Explosionsdarstellung in Fig. 13 erläutert.

Der Ventilkörper 24 umfasst eine Mehrzahl von Ventilsegmenten 30, die jeweils eine Ventilöffnung 26 aufweisen (nicht bei allen Segmenten 30 zu sehen). Es ist aber auch durchaus denkbar, dass Ventilsegmente ohne Ventilöffnung 26 verwendet werden, beispielsweise um bestimmte Verteilerrohre 14 für das betreffende Ventil 10 stets zu sperren.

Die Ventilsegmente 30 sind mittels Verbindungselementen 32 miteinander gekoppelt. Die Verbindungselemente 32 weisen zwei Zylindersegmente 38 auf, die in die entsprechenden Ventilsegmente 30 eingeführt werden. Zwischen den Zylindersegmenten 38 ist ein Kopplungssegment 36 mit sich in axialer Richtung erstreckenden Vorsprüngen 40 vorgesehen, die bei der Verbindung des Verbindungselements 32 mit dem entsprechenden Ventilsegment 30 in komplementär ausgebildete Ausnehmungen 42 an dem Ventilsegment 30 eingeführt werden. Die Vorsprünge 40 und Ausnehmungen 42 bilden Formschlussmerkmale, die ein Verdrehen der Ventilsegmente 30 relativ zueinander zuverlässig verhindern. Die regelmäßige Anordnung der Vorsprünge 40 und Ausnehmungen 42 ermöglicht es auch, die Segmente 30 bei der Zusammenstellung des Ventilkörpers 24 so auszurichten, dass die Ventilöffnungen 26 die gewünschte Konfiguration aufweisen.

Die Verbindung der Ventilsegmente 30 mittels der Verbindungselemente 32 ist vorzugsweise dicht, so dass das Fluid nicht durch die Kopplungsstellen treten kann. Gemäß einer Ausführungsform dienen die Kopplungssegmente 36 der Verbindungselemente 32 als Radiallager zur reibungsreduzierten drehbaren Lagerung des Ventilkörpers 24 in dem Außenrohr 20. Den Kopplungssegmenten 36 kann auch eine Dichtfunktion zur Unterbindung einer axialen Strömung von Fluid in einem Spalt zwischen dem Außenrohr 20 und dem Ventilkörper 24 zukommen. In der Regel ist der Spalt aber so bemessen, dass hier nur vernachlässigbare Leckageströme auftreten, auch um die Anschlussöffnungen 22 in einem gesperrten Zustand dicht zu schließen.

Aus den vorstehenden Ausführungen ergibt es sich, dass der Ventilkörper 24 einen modularen Charakter aufweist. Es kann eine praktisch beliebige Anzahl von Ventilsegmenten 30 miteinander kombiniert werden, beispielsweise um ein Ventil für eine Verteilereinrichtung mit mehr oder weniger als vier Verteilerrohren zu bilden. Zu diesem Zweck ist es lediglich erforderlich, die entsprechende Anzahl von Ventilsegmenten 30 hinzuzufügen bzw. zu entfernen. Lediglich das Außenrohr muss dann ausgetauscht werden.

Es versteht sich, dass die Ventilöffnungen 26 der Segmente 30 nicht alle gleich groß sein müssen. Es ist auch möglich, dass ein Ventilsegment 30 mehrere Öffnungen 26 (mit gleicher oder unterschiedlicher Größe) aufweist oder - wie bereits erwähnt - keine Öffnung 26 aufweist. Analoges gilt für die Anschlussöffnung 22 des Außenrohrs 20.

Die axialen Enden des Ventilkörpers 24 bilden Abschlusselemente 44A, 44B, die jeweils ein Zylindersegment 38 und ein Kopplungssegment 36 aufweisen. Das Abschlusselement 44A ist in axialer Richtung verschlossen und weist einen Wellenansatz 46 zur Kopplung mit einem Stellantrieb auf, mittels dem die Drehstellung des Ventilkörpers 24 in dem Außenrohr 20 eingestellt werden kann. Das Abschlusselement 44B ist in axialer Richtung offen, um den Eintritt oder Austritt von Fluid zu ermöglichen (axiale Öffnung 28).

Der wie vorstehend beschrieben gebildete Ventilkörper 24 wird anschließend in das Außenrohr 20 eingesetzt, das durch Deckelelemente 48A, 48B verschlossen wird. Da der Ventilkörper 24 im Wesentlichen die gleiche Länge aufweist wie das Außenrohr 20 oder nur geringfügig kürzer ist, sichern die installierten Deckelelemente 48A, 48B den Ventilkörper 24 in axialer Richtung.

Das Deckelelement 48A weist eine Ausnehmung auf, durch die der Wellenansatz 46 ragt. Das Deckelelement 48B weist eine Anschlussmöglichkeit für eine Anschlussleitung auf.

Das vorstehend beschriebene Konzept eines Ventils 10 mit einem modularen Ventilkörper 24 kann vorteilhaft mit dem erfindungsgemäßen Konzept einer hydraulischen Verteilereinrichtung kombiniert werden. Es versteht sich jedoch, dass modulare Ventilkörper auch in anderen Anwendungsgebieten zum Einsatz gelangen können.

### Bezugszeichen

- 10: Ventil
- 12: hydraulische Verteilereinrichtung
- 14: Verteilerrohr
- 16: Flansch
- 18: Ventilaufnahmeöffnung
- 20: Außenrohr
- 22: Anschlussöffnung
- 24: Ventilkörper
- 26: Ventilöffnung
- 28: axiale Öffnung
- 30: Ventilsegment
- 32: Verbindungselement
- 34: Wärmespeicher
- 36: Kopplungssegment
- 38: Zylindersegment
- 40: Vorsprung
- 42: Ausnehmung
- 44A, 44B: Abschlusselement
- 46: Wellenansatz
- 48A, 48B: Deckelelement

- a: Heizsystem
- b: Wärmespeicher
- c-1: Kaltwasserleitung
- c-2: Warmwasserleitung
- c-3: Leitung
- d: Pumpe
- e-1 bis e-4: Leitung
- f: Heizkessel
- g: Solaranlage
- h: Fußbodenheizung
- i: Heizkörper

- A: Ventilebene
- X: Mittenebene

## Patentansprüche

1. Hydraulische Verteilereinrichtung für ein Energiesystem (a) eines Gebäudes mit zumindest zwei versetzt zueinander angeordneten Verteilerrohren (14), die jeweils mit zumindest einer Wärmequelle (b, f, g) oder Wärmesenke (h, i) des Energiesystems in Verbindung bringbar sind, und mit zumindest zwei quer, insbesondere senkrecht zu den Verteilerrohren angeordneten rohrförmigen Ventileinrichtungen (10), die versetzt zueinander angeordnet sind und die jeweils mit zumindest einer Wärmesenke bzw. Wärmequelle des Energiesystems in Verbindung bringbar sind, wobei die Ventileinrichtungen und die Verteilerrohre in einer gemeinsamen Ebene liegen oder in parallel versetzten Ebenen (A, X) liegen,
**dadurch gekennzeichnet, dass**
die Ventileinrichtungen (10) die Verteilerrohre durchqueren und dass die Ventileinrichtungen derart angeordnet und ausgebildet sind, dass ihre die Verteilerrohre (14) durchquerenden Abschnitte von einem in den Verteilerrohren geführten Fluid vollständig umströmt werden.

2. Hydraulische Verteilereinrichtung nach Anspruch 1,
wobei eine Erstreckung des Strömungsquerschnitts der Verteilerrohre (14) in einer Richtung senkrecht zu der gemeinsamen Ebene oder den gemeinsamen Ebenen (A, X) größer ist als die Erstreckung der Ventileinrichtungen (10) in dieser Richtung.

3. Hydraulische Verteilereinrichtung nach Anspruch 1 oder 2,
wobei ein Strömungsquerschnitt der Verteilerrohre (14) zumindest in einem Bereich der Ventileinrichtungen (10) rechteckig oder oval ist.

4. Hydraulische Verteilereinrichtung nach einem der vorstehenden Ansprüche, wobei zumindest eine der Ventileinrichtungen (10) parallel versetzt zu einer durch die Verteilerrohre (14) aufgespannten Ebene (X) angeordnet ist.

5. Hydraulische Verteilereinrichtung nach einem der vorstehenden Ansprüche, wobei die Ventileinrichtungen (10) parallel zueinander angeordnet sind und/oder wobei die Verteilerrohre (14) parallel zueinander angeordnet sind.

6. Hydraulische Verteilereinrichtung nach einem der vorstehenden Ansprüche, wobei die Wärmequelle (b) ein Pufferspeicher ist oder einen Pufferspeicher umfasst, insbesondere wobei der Pufferspeicher ein Schichtspeicher ist.

7. Ventileinrichtung für eine hydraulische Verteilereinrichtung, insbesondere für eine hydraulische Verteilereinrichtung (12) gemäß zumindest einem der vorstehenden Ansprüche, umfassend:
ein Außenrohr (20), das einen zylinderförmigen Ventilraum definiert, der zumindest eine erste und eine zweite Anschlussöffnung (22) aufweist, und
einen in dem Ventilraum angeordneten und um eine Ventilachse verdrehbaren zylinderförmigen Ventilkörper (24), der von Fluid durchströmbar ist und der zumindest eine axiale Öffnung (28) und zumindest eine radiale Ventilöffnung (26) aufweist, wobei die erste und/oder die zweite Anschlussöffnung in Abhängigkeit von einer Winkelstellung des Ventilkörpers in Verbindung mit der radialen Ventilöffnung bringbar sind,
wobei der Ventilkörper zumindest zwei hülsenförmige Ventilsegmente (30) umfasst,
**dadurch gekennzeichnet, dass**
die Ventilsegmente (30) in axialer Richtung durch ein Verbindungselement (32) miteinander gekoppelt sind, wobei das Verbindungselement zumindest ein Formschlusselement (40) aufweist, das mit zumindest einem komplementären Formschlusselement (42) an einem der Ventilsegmente einen Kopplungsabschnitt bildet,
wobei beide Ventilsegmente (30) über einen jeweiligen Kopplungsabschnitt mit dem Verbindungselement (32) gekoppelt sind.

8. Ventileinrichtung nach Anspruch 7,
wobei der Kopplungsabschnitt (36) in Umfangsrichtung formschlüssig wirksam ist, insbesondere ausschließlich in Umfangsrichtung.

9. Ventileinrichtung nach einem der Ansprüche 7 oder 8,
wobei das Formschlusselement einen Vorsprung (40) und das komplementäre Formschlusselement eine Ausnehmung (42) umfasst, oder umgekehrt.

10. Ventileinrichtung nach zumindest einem der Ansprüche 7 bis 9, wobei der Ventilkörper (24) zumindest ein axiales Abschlusselement (44A, 44B) umfasst, das zumindest ein Formschlusselement (40) aufweist, das mit zumindest einem komplementären Formschlusselement (42) an einem der Ventilsegmente (30) einen Kopplungsabschnitt bildet, insbesondere wobei das Formschlusselement des Abschlusselements dem Formschlusselement des Verbindungselements gleicht.

11. Ventileinrichtung nach Anspruch 10,
wobei das Abschlusselement (44A) einen Antriebsabschnitt (46) zur antriebswirksamen Kopplung mit einem Stellmotor aufweist.

## Claims

1. A hydraulic distribution device for an energy system (a) of a building having at least two distribution pipes (14), which are arranged offset relative to one another and which can each be brought into communication with at least one heat source (b, f, g) or heat sink (h, i) of the energy system, and having at least two tubular valve devices (10), which are arranged transversely, in particular perpendicularly, to the distribution pipes, which are arranged offset relative to one another and which can each be brought into communication with at least one heat sink or heat source of the energy system, wherein the valve devices and the distribution pipes lie in a common plane or lie in planes (A, X) which are offset in parallel, **characterized in that**
the valve devices (10) pass through the distribution pipes, and **in that** the valve devices are arranged and configured such that their sections passing through the distribution pipes (14) are completely flowed around by a fluid guided in the distribution pipes.

2. A hydraulic distribution device according to claim 1,
wherein an extent of the flow cross-section of the distribution pipes (14) in a direction perpendicular to the common plane or the common planes (A, X) is greater than the extent of the valve devices (10) in this direction.

3. A hydraulic distribution device according to claim 1 or 2,
wherein a flow cross-section of the distribution pipes (14) is rectangular or oval at least in a region of the valve devices (10).

4. A hydraulic distribution device according to any one of the preceding claims, wherein at least one of the valve devices (10) is arranged offset in parallel from a plane (X) spanned by the distribution pipes (14).

5. A hydraulic distribution device according to any one of the preceding claims, wherein the valve devices (10) are arranged parallel to one another and/or wherein the distribution pipes (14) are arranged parallel to one another.

6. A hydraulic distribution device according to any one of the preceding claims, wherein the heat source (b) is a buffer storage tank or comprises a buffer storage tank, in particular wherein the buffer storage tank is a stratified storage tank.

7. A valve device for a hydraulic distribution device, in particular for a hydraulic distribution device (12) according to at least one of the preceding claims, comprising:
an outer tube (20), which defines a cylindrical valve chamber which has at least a first and a second connection opening (22), and
a cylindrical valve body (24) which is arranged in the valve chamber and is rotatable about a valve axis and which can be flowed through by fluid and has at least one axial opening (28) and at least one radial valve opening (26), wherein the first and/or the second connection opening can be brought into communication with the radial valve opening in dependence on an angular position of the valve body,
wherein the valve body comprises at least two sleeve-shaped valve segments (30),
**characterized in that**
the valve segments (30) are coupled to one another in the axial direction by a connecting element (32), with the connecting element having at least one form-fitting element (40), which forms a coupling section with at least one complementary form-fitting element (42) at one of the valve segments,
wherein both valve segments (30) are coupled to the connecting element (32) via a respective coupling section.

8. A valve device according to claim 7,
wherein the coupling section (36) is effective in a form-fitting manner in a circumferential direction, in particular exclusively in a circumferential direction.

9. A valve device according to one of the claims 7 or 8,
wherein the form-fitting element comprises a protrusion (40) and the complementary form-fitting element comprises a recess (42), or vice versa.

10. A valve device according to at least one of the claims 7 to 9,
wherein the valve body (24) comprises at least one axial end element (44A, 44B) which has at least one form-fitting element (40), which forms a coupling section with at least one complementary form-fitting element (42) at one of the valve segments (30), in particular wherein the form-fitting element of the end element corresponds to the form-fitting element of the connecting element.

11. A valve device according to claim 10,
wherein the end element (44A) has a drive section (46) for a drive-effective coupling to an actuator motor.

## Revendications

1. Dispositif de distribution hydraulique pour un système énergétique (a) d'un bâtiment avec au moins deux tuyaux de distribution (14) décalés les uns par rapport aux autres, qui peuvent chacun être mis en communication avec au moins une source de chaleur (b, f, g) ou un puits de chaleur (h, i) du système énergétique, et avec au moins deux dispositifs de vanne tubulaires (10) agencés transversalement, en particulier perpendiculairement, aux tuyaux de distribution, qui sont décalés les uns par rapport aux autres et qui peuvent chacun être mis en communication avec au moins un puits de chaleur ou une source de chaleur du système énergétique, dans lequel les dispositifs de vanne et les tuyaux de distribution se trouvent dans un plan commun ou dans des plans parallèles décalés (A, X),
**caractérisé en ce que**
les dispositifs de vanne (10) traversent les tuyaux de distribution et **en ce que**
les dispositifs de vanne sont agencés et conçus de telle sorte que leurs portions traversant les tuyaux de distribution (14) sont complètement entourées par un fluide guidé dans les tuyaux de distribution.

2. Dispositif de distribution hydraulique selon la revendication 1,
dans lequel une étendue de la section d'écoulement des tuyaux de distribution (14), dans une direction perpendiculaire au plan commun ou aux plans communs (A, X), est supérieure à l'étendue des dispositifs de vanne (10) dans cette direction.

3. Dispositif de distribution hydraulique selon la revendication 1 ou 2,
dans lequel une section d'écoulement des tuyaux de distribution (14) est rectangulaire ou ovale au moins dans une zone des dispositifs de vanne (10).

4. Dispositif de distribution hydraulique selon l'une des revendications précédentes,
dans lequel l'un au moins des dispositifs de vanne (10) est décalé parallèlement par rapport à un plan (X) défini par les tuyaux de distribution (14).

5. Dispositif de distribution hydraulique selon l'une des revendications précédentes,
dans lequel les dispositifs de vanne (10) sont agencés parallèlement les uns aux autres et/ou dans lequel les tuyaux de distribution (14) sont agencés parallèlement les uns aux autres.

6. Dispositif de distribution hydraulique selon l'une des revendications précédentes,
dans lequel la source de chaleur (b) est un accumulateur tampon ou comprend un accumulateur tampon, en particulier dans lequel l'accumulateur tampon est un accumulateur à stratification.

7. Dispositif de vanne pour un dispositif de distribution hydraulique, en particulier pour un dispositif de distribution hydraulique (12) selon au moins l'une des revendications précédentes, comprenant :
un tube extérieur (20), qui définit un espace de vanne cylindrique, lequel présente au moins une première et une deuxième ouverture de raccordement (22), et
un corps de vanne cylindrique (24) agencé dans l'espace de vanne et pouvant tourner autour d'un axe de vanne, à travers lequel un fluide peut s'écouler et qui présente au moins une ouverture axiale (28) et au moins une ouverture de vanne radiale (26), dans lequel la première et/ou la deuxième ouverture de raccordement peuvent être mises en communication avec l'ouverture de vanne radiale en dépendance d'une position angulaire du corps de vanne,
dans lequel le corps de vanne comprend au moins deux segments de vanne en forme de manchon (30),
**caractérisé en ce que**
les segments de vanne (30) sont couplés entre eux dans la direction axiale par un élément de liaison (32), dans lequel l'élément de liaison présente au moins un élément à coopération de forme (40), qui forme une section de couplage avec au moins un élément à coopération de forme complémentaire (42) sur l'un des segments de vanne,
dans lequel les deux segments de vanne (30) sont couplés à l'élément de liaison (32) par l'intermédiaire d'une section de couplage respective.

8. Dispositif de vanne selon la revendication 7,
dans lequel la section de couplage (36) est efficace par complémentarité de forme dans une direction circonférentielle, en particulier exclusivement dans une direction circonférentielle.

9. Dispositif de vanne selon l'une quelconque des revendications 7 ou 8,
dans lequel l'élément à coopération de forme comprend une saillie (40) et l'élément à coopération de forme complémentaire comprend un évidement (42), ou inversement.

10. Dispositif de vanne selon l'une au moins des revendications 7 à 9,
dans lequel le corps de vanne (24) comprend au moins un élément de fermeture axial (44A, 44B), qui présente au moins un élément à coopération de forme (40), qui forme une section de couplage avec au moins un élément à coopération de forme complémentaire (42) sur l'un des segments de vanne (30), en particulier dans lequel l'élément à coopération de forme de l'élément de fermeture correspond à l'élément à coopération de forme de l'élément de liaison.

11. Dispositif de vanne selon la revendication 10,
dans lequel l'élément de fermeture (44A) présente une section d'entraînement (46) destinée à un couplage d'entraînement avec un servomoteur..
